# EUROPEAN PATENT SPECIFICATION

(11) **EP 4 558 540 B1**
(45) Date of publication and mention of the grant of the patent: **19.08.2026**
(21) Application number: 23744488.0
(22) Date of filing: 19.07.2023
(51) Int. Cl.: C08G 61/02, C08L 65/00, C09D 165/00

(54) **COPOLYMER AND ITS USE AS COATING**
COPOLYMER UND SEINE VERWENDUNG ALS BESCHICHTUNGSMITTEL
COPOLYMÈRE ET SON UTILISATION EN TANT QUE REVÊTEMENT

(30) Priority: 20.07.2022 EP 22425031
(43) Date of publication of application: 28.05.2025
(73) Proprietor: ETH Zurich, 8092 Zürich (CH); UNIVERSITA' DEGLI STUDI DI MILANO, 20122 Milano (IT)
(72) Inventor: D'ELIA, Marco Francesco, 6005 Luzern (CH); CASERI, Walter Remo, 8049 Zuerich (CH); NIEDERBERGER, Markus Josef, 6386 Wolfenschiessen (CH); TRASATTI, Stefano Pierpaolo Marcello, 20133 Milano (IT); MAGNI, Mirko, 20864 Agrate Brianza (MB) (IT)
(74) Representative: Porta & Consulenti Associati S.p.A.
(86) International application number: PCT/EP2023/070063
(87) International publication number: WO 2024/017963

(56) References cited:
- US-A- 3 265 640
- D'ELIA ET AL: "Poly(phenylene methylene)-Based Coatings for Corrosion Protection: Replacement of Additives by Use of Copolymers", APPLIED SCIENCES, vol. 9, no. 17, 29 August 2019 (2019-08-29), pages 3551, XP093008244, DOI: 10.3390/app9173551
- NEMOTO TADAMASA ET AL: "Synthesis and Properties of Organosoluble Poly(phenylenemethylene)s from Substituted Benzenes or Naphthalenes", POLYMER JOURNAL, vol. 38, no. 12, 16 November 2006 (2006-11-16), London, pages 1278 - 1282, XP093008488, ISSN: 0032-3896, DOI: 10.1295/polymj.PJ2006108

## Description

The present invention relates to a copolymer and its use as coating.

Protection against corrosion is one of the most important functions of organic coating compositions for metal substrates. On the one hand, the barrier function of the coating composition can be improved to keep corrosive agents, such as oxygen, water and ions, away from the metal surface. On the other hand, it is possible to employ corrosion-inhibiting pigments which intervene chemically or electrochemically in the corrosion process, for example, by the formation of insoluble deposits with corrosion products or by passivation of the metal surface.

Poly(phenylene methylene) (PPM) is a hydrocarbon polymer with the general formula (C₆H₄[CH₂])ₙ. It is structurally located between polyethylene and polyphenylene, consisting of an alternating sequence of phenylene and methylene units. Remarkably, it exhibits a rather unique combination of material properties. Besides high hydrophobicity, it is highly thermally stable and fluorescent. This optical property is unusual for a non-conjugated polymer such as PPM (Marco F. D'Elia et al; Poly(phenylene methylene)-Based Coatings for Corrosion Protection: Replacement of Additives by Use of Copolymers, Appl. Sci. 2019, 9, 3551; doi:10.3390/app917355). PPM has also been shown to be effective in corrosion protection, however, only when blended with rheological additives, such as polysiloxanes and benzylbutyl phthalate, as an external plasticizer to prevent cracking of the surface due to the stiffness of the polymer. To avoid common problems related to the use of external plasticizers, the development of PPM-related copolymer-based coatings containing n-octyloxy side chains and their anti-corrosion behavior were described by D'Elia et al. However, said copolymers have a low molar mass, are not soluble in any solvent and cannot be processed which, of course, limits their industrial use.

Nemoto Tadamasa et al (Synthesis and properties of organosoluble poly(phenylenemethylene)s from substituted benzenes or naphthalenes", POLYMER JOURNAL , vol. 38, no. 12, 16 November 2006 (2006-11-16), pages 1278-1282, XP093008488) disclose the synthesis of organosoluble substituted benzene or naphthalene-formaldehyde copolymers vial addition-condensation.

US3265640A discloses the process of forming a shaped crosslinked polymer which comprises reacting alpha, alpha'-dichloro-p-xylene and a polysubstituted benzene in the presence of a catalytic amount of a Friedel-Crafts catalyst to form a soluble condensate polymer.Brändle et al. (Journal of Polymer Science, 2018, 56, 309ff) disclose the synthesis and fractionation of 2,3,5,6-tetramethyl benzyl chloride in bulk polymerization in the presence of the hazardous SnCl₄ catalyst. However, the synthesis results an insoluble crosslinked polymer with a glass transition temperature about room temperature and the small soluble fraction of this material revealed a molar mass below 800 Da. Furthermore, a pre-heating of the solid monomer at 80°C was necessary and polymerization only occurred after heating at 180°C for 1 h. Therefore, said polymer is not suitable for industrial applications.

The object of the present invention was to provide a PPM-based copolymer with a high molar mass, and which is soluble in common organic solvents (i.e., easily processable).

The problem is solved by a copolymer according to claim 1. Further preferred embodiments are subject of the dependent claims.

It was found that the copolymer of the present invention comprising a first monomer of the general formula and a second monomer of the general formula (II) can be obtained with a molar mass above 100 kDalton and is entirely soluble in common organic solvents such as chloroform, dichloromethane or THF. Furthermore, the copolymer has an excellent combination of materials properties, namely high thermal stability, resistance towards oxidizing agents and good barrier properties. In addition, the fluorescence of the copolymer of the present invention facilitates detection of failures in the coating upon corrosion or in any other barrier/coating application.

Furthermore, the copolymer according to the present invention is thermoplastic. This allows copolymer to be processed by using all the strategies adopted for the other thermoplastic polymers which is a significant advantage for its industrial application, since for example in the corrosion protection, almost all the commercially available coatings are thermosetting resins. Besides, the reversible thermoplastic behavior of the copolymer according to the present invention allows recovery of the structure after a thermal shock (e.g., exploitable for self-healing).

In addition, the complete substitution of the phenylene ring in the monomer of the general formula (II) does not allow any reaction on the aromatic framework and prevents the formation of complex three-dimensional network, providing entirely soluble thermoplastic copolymers with enhanced material properties due to the side chains insertion.

The copolymer of the present invention comprises a first monomer of the general formula (I) 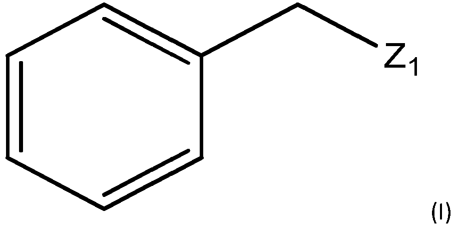
wherein Z₁ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃), and
a second monomer of the general formula (II) 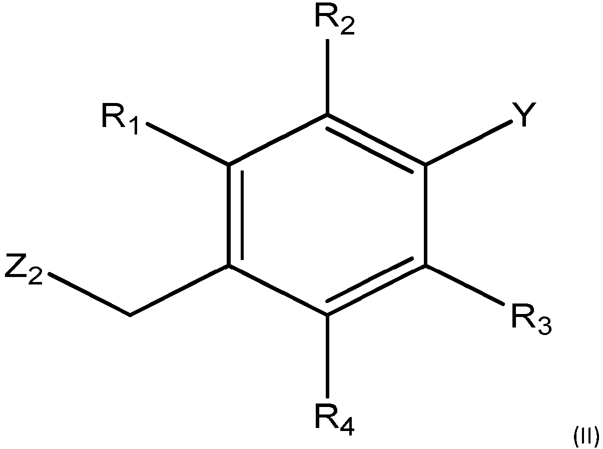
wherein Z₂ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃).

Y is selected from the group consisting of -CH₂Z₃, wherein Z₃ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃),
a linear or branched C₁-C₃₀ alkyl, a linear or branched C₂-C₃₀ alkenyl, a linear or branched C₂-C₃₀ alkynyl, sulfo (-SO₃H), nitro, amino, hydroxy,

   -NHCOR₅, -CONHR₆, -OCOR₇, -COOR₈ and -OR₉,
wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl; and R₁, R₂, R₃ and R₄ are independently from each other selected from the group consisting of linear or branched C₁-C₃₀ alkyl, a linear or branched C₂-C₃₀ alkenyl, a linear or branched C₂-C₃₀ alkynyl, sulfo (-SO₃H), nitro, amino, hydroxy, oligo(C₂ to C₄-alkylene glycol),

   -NHCOR₅, -CONHR₆, -OCOR₇, -COOR₈ and -OR₉,
wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl.

As used herein, "C₁-C₃₀ alkyl" means an aliphatic hydrocarbon group which may be straight or branched and comprising 1 to 30 carbon atoms in the chain. "Branched" means that one or more lower alkyl groups, such as methyl, ethyl or propyl, are attached to a linear alkyl chain.

"C₂-C₃₀ alkenyl" means an aliphatic hydrocarbon group containing at least one carbon-carbon double bond and which may be straight or branched and comprising 2 to 30 carbon atoms in the chain. "Branched" means that one or more lower alkyl groups, such as methyl, ethyl or propyl, are attached to the linear alkenyl chain.

"C₂-C₃₀ alkynyl" means an aliphatic hydrocarbon group containing at least one carbon-carbon triple bond and which may be straight or branched and comprising 2 to 30 carbon atoms in the chain. "Branched" means that one or more lower alkyl groups, such as methyl, ethyl or propyl, are attached to the linear alkynyl chain.

"C₂ to C₄-oligo(alkylene glycol)" refers to an oligomer that consists of a small number of repeating units of alkene glycol, such as oligo(ethylene glycol), oligo(propylene glycol) and oligo(ethylene/propylene glycol). The alkylene repeating unit may be linear or branched and has 2 to 4 carbon atoms. The number of repeating units is between 1 and 10, preferably between 1 and 5. For example oligo(ethylene glycol) has the following formula - (CH₂CH₂O)p₁-H, and p₁ is an integer between 1 and 10, preferably between 1 and 5. For example oligo(propylene glycol) has the formula -(CH(CH₃)CH₂O)p₂-H or -(CH₂CH₂CH₂O)p₂-H and p₂ is an integer between 1 and 10, preferably between 1 and 5. Oligo(ethylene/propylene glycol) refers to an oligomer with a mixture of ethylene and propylene glycol units in its repeat unit. The term "monomer" means a low-molecular, reactive substance that chemically bonds to other molecules, particularly to other monomers, to form a polymer. In the present case, each monomer comprises at least one leaving group.

The term "copolymer" means a compound containing multiple monomers in a linear or branched chain, which contains two or more different monomers.

The term "bimodal" means that the claimed compounds have at least two polymer or copolymer components having a weight average molecular weight (Mw) difference by at least 50,000 g/mol (as referred to herein "ΔMw") as measured by GPC (gel permeation chromatography) described herein but is not limited to compounds demonstrating two or more visible peaks or humps in the curve generated by the chromatograph. Thus, within the context of the present invention, a monomodal phase which contains polymers of a molar mass of 100,000 g/mol and also 150,000 g/mol are considered to be bimodal as well.

The term "Mₙ (number-average molar mass)" means the total mass of all the polymer chains in a sample divided by the total number of chains in a sample and is determined by Size-Exclusion Chromatography (SEC).

The term "M_{w} mass-average molar mass (or weight-average molar mass)" means the average of the molar masses of all the chains weighted by the mass of the chains of each length and is determined by Size-Exclusion Chromatography (SEC).

The term "PDI" means polydispersity index and is equivalent to the term "MWD" (molecular weight distribution), which is determined by using Size-Exclusion Chromatography (SEC).

Preferably, the second monomer in the copolymer of the present invention has the general formula (lla) 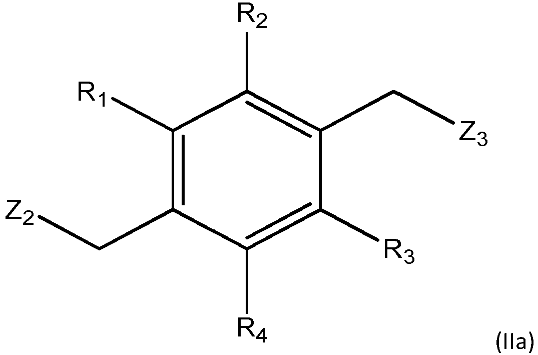
wherein Z₂ is selected from the group consisting of fluoro, chloro, bromo, iodo, hydroxyl toluene-4-sulfonyloxy (-O-SO₂-C₆H₄-CH₃) and methylsulfonyloxy (-O-SO₂-CH₃);
Z₃ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃); and
R₁, R₂, R₃ and R₄ are independently from each other selected from the group consisting of linear or branched C₁-C₃₀ alkyl, linear or branched C₂-C₃₀ alkenyl, linear or branched C₂-C₃₀ alkynyl, sulfo (-SO₃H), nitro, amino, hydroxy, oligo(ethylene glycol), -NHCOR₅, -CONHR₆, - OCOR₇, -COOR₈ and -OR₉, wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl.

Due to the presence of the two reactive groups -CH₂Z₂ and -CH₂Z₃, wherein Z₂ and Z₃ are preferably the same, the monomer of the general formula (IIa) acts as auxiliary catalyst. It was shown that the bifunctionality of said monomer significantly enhanced the yield of a copolymer with a high molar mass and a high PDI value. Furthermore, it was shown that the presence of the monomer of the general formula (II) has no negative impact on the connectivity along the polymeric backbone.

Z₁, Z₂ and Z₃ act as leaving groups. The leaving group ability generally increases from chloro to bromo to iodo; however, chloro is preferred because of its better availability. Suitable sulfonyloxy groups (residue -SO₃⁻), which act as leaving groups of suitable sulfonic esters (i.e. sulfonates), are an attractive alternative to the halo groups, especially when the residue is electron-withdrawing. They can conveniently be prepared from a myriad of commercially available derivatives, and they show a similar reactivity than the halo groups.

Examples for suitable sulfonyloxy groups are toluene-4-sulfonyloxy (-O-SO₂-C₆H₄-CH₃; i.e. the monomer is a p-toluenesulfonate, synonym: tosylate), methylsulfonyloxy (-O-SO₂-CH₃; i.e. the monomer is a methanesulfonate, synonym: mesylate) or trifluoromethylsulfonyloxy (-O-SO₂-CF₃; i.e. the monomer is a trifluoromethanesulfonate, synonym: triflate).

In a preferred embodiment Z₁, Z₂ and Z₃ in the monomers of the general formulae (I) and (II) are the same, which allows a more controllable reaction and an easier work-up of the crude and purification from the side products resulting from exiting of the leaving groups.

Especially good results could be obtained when the second monomer of the general formula (IIa) have the same R₁, R₂, R₃ and R₄, preferably R₁, R₂, R₃ and R₄ are methyl, in particular if Z₂ and Z₃ are chloro groups (α,α-bis-chloromethyl durene):

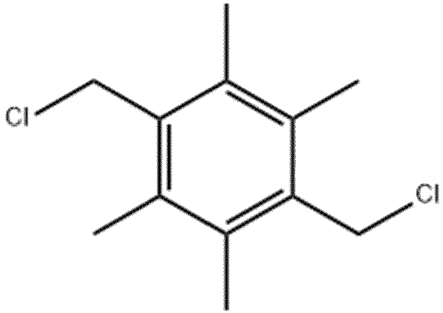

It was shown that the presence of α,α-bis-chloromethyl durene does not affect the initiation temperature of the polymerization below 150°C. However, at a temperature higher than 150°C, α,α-bis-chloromethyl durene influences the kinetic of the reaction by boosting up the monomer conversion rate. The increased rate of monomer conversion leads to an increase of the viscosity in the reaction batch.

In another embodiment of the present invention, the copolymer can comprise one or more additional monomer of the general formula (III) 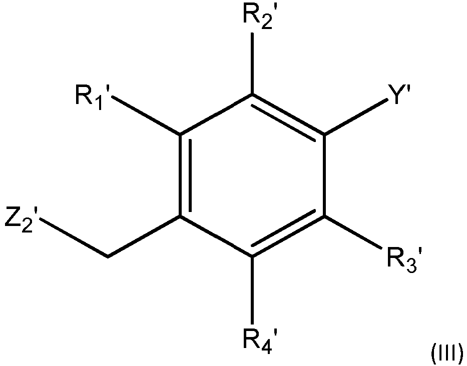
wherein Z₂' is selected from the group consisting of fluoro, chloro, bromo, iodo, toluene-4-sulfonyloxy (-O-SO₂-C₆H₄-CH₃) and methylsulfonyl (-SO₂-CH₃),
Y' is selected from the group consisting of -CH₂Z₃', wherein Z₃' is selected from the group consisting of fluoro, chloro, bromo, iodo, toluene-4-sulfonyloxy (-O-SO₂-C₆H₄-CH₃) and methylsulfonyloxy (-O-SO₂-CH₃); a linear or branched C₁-C₃₀ alkyl, a linear or branched C₂-C₃₀ alkenyl, a linear or branched C₂-C₃₀ alkynyl, sulfo (-SO₃H), nitro, amino, hydroxy, - NHCOR₅', -CONHR₆', -OCOR₇', -COOR₈' and -OR₉', wherein R₅', R₆', R₇', R₈' and R₉' are selected from the group consisting of a linear or branched C₁-C₃₀ alkyl, a linear or branched C₂-C₃₀ alkenyl and a linear or branched C₂-C₃₀ alkynyl; and
R₁', R₂', R₃' and R₄' are independently from each other selected from the group consisting of a linear or branched C₁-C₃₀ alkyl, a linear or branched C₂-C₃₀ alkenyl, a linear or branched C₂-C₃₀ alkynyl, sulfo (-SO₃H), nitro, amino, hydroxy, oligo(C₂ to C₄-alkylene glycol),

   -NHCOR₅', -CONHR₆', -OCOR₇', -COOR₈' and -OR₉',
wherein R₅', R₆', R₇', R₈' and R₉' are selected from the group consisting of a linear or branched C₁-C₃₀ alkyl, a linear or branched C₂-C₃₀ alkenyl and a linear or branched C₂-C₃₀ alkynyl, and
wherein the monomer of the general formula (III) is different from the monomer of the general formula (II).

Such an additional monomer can be added for example for tailoring the rheological properties of the coating.

Preferably, wherein the compound of formula II and Ila at least one of R₁, R₂, R₃ and R₄ is selected from the group consisting of a linear or branched C₈-C₃₀ alkyl, a linear or branched C₈-C₃₀ alkenyl, a linear or branched C₈-C₃₀alkynyl and -OR₉, wherein R₉ is selected from the group consisting of a linear or branched C₈-C₃₀ alkyl, a linear or branched C₈-C₃₀ alkenyl and a linear or branched C₈-C₃₀ alkynyl. In an especially preferred embodiment one of R₁, R₂, R₃ and R₄ is -OR₉, wherein R₉ is selected from the group consisting of linear or branched C₈-C₁₂ alkyl, preferably octyl, and the remaining residues are a C₁-C₅ alkyl, preferably methyl. Such a copolymer result in a softer material which can be easily deformed. Such copolymers can be easily processed with different methods and show self-healing by exploiting the thermodynamic of corrosion reactions. Furthermore, they are suitable for low temperature applications.

In one embodiment of the present invention the copolymer comprises 0.01 to 5% (mol/mol), preferably 0.1 to 1% (mol/mol) and most preferably 0.5% (mol/mol) of the monomer of the general formula (II). The concentration of the monomer of the general formula (II) allows to control the molecular weight. However, too high concentrations could result in highly crosslinked polymers. A low molar ratio of monomer of the formula (II) / monomer of the formula (I) of 0.1 to 1% (mol/mol) and most preferably 0.5% (mol/mol) resulted in a high molar mass of the copolymer according to the present invention.

Another aspect of the present invention relates to a method for preparing the copolymer according to the present invention. The copolymer is obtained by reacting a monomer of the general formula (I) and a monomer of the general formula (II) in the presence of a Lewis acid catalyst. The term "Lewis acid" is used herein to refer to a substance which can accept an unshared electron pair from another molecule.

The amount of Lewis acid used depends on the desired reaction time and on the concentration of monomer of the general formula (II). Generally, the catalytic amount added is from 0 % by weight to 1.5% by weight equivalents of Lewis acid per equivalent of monomer of the general formula (I) in the reaction mixture. The optimal amount of Lewis acid depends on the catalyst as well.

Preferably, the reaction is carried out in the presence of a catalyst that is selected from the group consisting of bismuth (III) based catalysts, molybdenum-based catalysts, and tungsten-based catalysts. It could be shown that said catalysts are more efficient than the tin catalysts used in the state of the art. Said catalysts required a lower reaction time required to maximize the monomer conversion. Most preferably, the catalyst is selected from the group consisting of WCl₄(MeCN)₂, WBr₂(CO)₃(dme), WCl₄(THF)₂ and Mol₂(CO)₃(MeCN)₂ which all show a similar catalytic behavior via step-growth polymerization (wherein MeCN is acetonitrile and dme is dimethoxyethane). For example, a copolymerization of benzyl chloride catalyzed by WCl₄(THF)₂ was carried out in the presence of α,α-bis-chloromethyl durene (0.5% mol/mol) resulted in a copolymer of the present invention with numeral average molar mass of more than 230'000 g mol⁻¹. Despite the high molecular weight, the copolymer of the present invention is soluble in organic solvents by contrast to other copolymerization or catalytic strategies reported in literature in which insoluble, and thus non-processable, polymers were obtained. In addition, said catalysts are present in solid form at room temperature, whereas SnCl₄ is a toxic liquid that is difficult to handle.

In one embodiment of the present invention the copolymer is prepared in the presence of the catalyst during the whole polymerization, and the monomer of the general formula (II) is added not before at least 40% by weight of the monomer of the general formula (I) have reacted. This allows an efficient mixing since the increase of viscosity can lead the Weissenberg effect which would lead to non-efficient mixing. Due to the thermoplastic behavior of the copolymer according to the present invention, it is possible to overcome this issue by increasing the temperature of the reaction.

Furthermore, monomer I acts as solvent for monomer II, i.e., the copolymerization reaction can be carried out in the absence of another solvent which is, of course, an economic and ecological benefit.

Preferably, the copolymerization reaction takes place at temperatures between 80°C and 180°C. Furthermore, a pre-heating of the monomer is not required. Pre-heating treatments are not required since benzyl chloride works also as solvent of the monomer of formula II, and in particular of BCMD.

BCMD ((3,6-bis(chloromethyl)durene) is preferably added in a range of 0.1%-1% (mol/mol) with respect to benzyl chloride. The kinetic of reaction depends upon the catalysts employed and the concentration of BCMD in the polymerization batch. The output of this copolymerization allows the obtainment of high molar mass polymer (number average molar mass above 100 KDa).

The copolymer according to the present invention can be used as coating, in particular as coating of metallic substrate. With the copolymer according to the present invention a continuous, essentially crackless layer is provided. Interestingly, there is no need for an additional plasticizer. A coating comprising the copolymer according to the present invention creates an excellent barrier between substrate metallic materials and the surrounding environments, thereby inhibiting the corrosion process. Such a coating is a corrosion-protective layer having excellent coating adhesion which is in compliance with ISO 17463:2014 and very good rheological properties. Furthermore, the rheologic behavior of the copolymer according to the present invention allows an intrinsic self-healing, probably by flowing, and thus closing the pores in the polymer matrix that induces or that are formed after localized corrosion events. This behavior endows the coating of the copolymer according to the present invention with an enhanced corrosion protection ability that increases the coating durability and effectiveness.

The thickness of the coating can be varied and adapted to the application field. Preferably, it is dimensioned to a value between 5 µm and 600 µm, preferably 5 µm and 50 µm. With this coating thicknesses it is possible to provide to the metallic substrate a good corrosion protection in compliance with ISO 17463:2014. These performance were confirmed also by testing of pre-damaged coatings (circular damage ∅= 0.52 mm) according to the procedure listed in ISO 17463:2014. The copolymer according to the present invention allows to apply coatings with a smaller thickness, such as 5 µm to 50 µm, whereas for example coating of epoxy resins have typically a thickness of 200 µm to 600 µm. The reduced thickness leads to lower cost of the material and has a positive environmental impact.

A material typically used for the substrate according to the present embodiment is aluminum and aluminum alloy, iron, and steel (galvanized or not) material, and other examples thereof include copper-based materials and nickel-based materials. The substrate may be pre-treated before the coating is applied, for example by a chemical pre-treatment, in particular a chromating treatment, a chromium-free pre-treatment, in particular a phosphating treatment or an anodizing process or silanization. The surface of the steel material may preliminarily be coated by a metal such as zinc. The shape of the substrate may be freely selected, and the substrate may be a primary processed product such as plate materials, rod materials and pipe materials, or a secondary processed product such as bolts, nuts, hinges, engine blocks, gaskets, and housings. Examples of processes for such a secondary processed product include cutting/grinding, press working, bending work, cutting process, casting process, forging process and other processes.

Preferably, the copolymer according to the present invention is used as corrosion protection. Corrosive environments can be for example acidic, alkaline, and salt environments. Such coatings are preferably used for business equipment, electrical apparatuses, automobiles, ships, bridges, airplanes and specifically for secondarily fabricated components, such as fasteners including bolts and nuts, attachments including clamps and clips, and press-molded products including plates, housings, hinges, and panels. These members are required to have high accuracy in assembling and at the same time high level of strength and adhesiveness of their coatings because they may be subjected to a large shear force when being fabricated and assembled.

The copolymer according to the present invention can be prepared as a powder, which can be easily stored and transported. Said powders can be heated to the desired temperature and then the molten product is applied to the substrate to be coated. The cooling process causes the molten material to harden and gain strength, forming a coating on the substrate. Because thermoplastic powder coatings can be reheated multiple times, they can be easily redistributed along a surface. This attribute allows flaws in coatings to be easily repaired using heat.

Another embodiment of the present invention relates to a paint comprising the copolymer according to the present invention. Such a paint creates a coating, which is capable of simultaneously acting as bonding, inhibiting, and (self-healing) protecting layer. The coating formed is strong and self-curing, and under normal environmental conditions requires no additional protective lacquer/paint overcoat and may be used as an uppermost paint layer. Furthermore, the coating may be used as a primer since it may be easily overcoated with a wide variety of paints to manipulate its final color, or to provide it with additional protection. Such additional protection may be needed when the coating is used under severely corrosive environmental conditions, for example, when the coated objects are ducts for corrosive chemicals. In addition, the paint, comprising the copolymer according to the present invention is rapidly dried after application and secures a sufficient pot life, so that it can be used irrespective of seasons and temperatures.

### Figures

Figure 1a shows the progress of monomer conversion in presence of WCl₄(THF)₂ and operative temperature as function of the reaction time.
Figure 1b shows gel permeation chromatograms of aliquots taken over the reaction and reveals the evolution of a trimodal molar mass distribution. Symbols of the curve coincide with the symbols of monomer conversion in figure 1a.
Figures 2 shows gel permeation chromatograms of poly(phenylene methylene) syntheses with different catalysts.
Figure 3 shows the comparison of ¹³C NMR signals of PPM synthesized with each catalyst. The peaks are assigned to the respective substitution pattern of the phenylene rings.
Figure 4a shows the progress of the monomer conversion and operative temperature in presence of BCMD as function of the reaction time.
Figure 4b shows gel permeation chromatograms of aliquots taken over the reaction and reveals the evolution of a trimodal molar mass distribution. Symbols of the curve coincide with the symbols of monomer conversion in Figure 4a.
Figure 5 shows gel permeation chromatograms of the low molar mass fraction (F_{low}, squares), and high molar mass (F_{high}, circles).
Figure 6 shows a comparison of the normalized ¹³C NMR signals of PPM copolymer (squares) and PPM homo-polymer (circles).
Figure 7 shows the accelerated cyclic electrochemical technique (ACET) results for 30 µm thick coating PPM containing octyloxy side chain according to the prior art.
Figure 8 shows the accelerated cyclic electrochemical technique (ACET) results for pre-damaged 30 µm thick coating PPM containing octyloxy side chain according to the prior art.
Figure 9 shows the accelerated cyclic electrochemical technique (ACET) results for 30 µm thick coating with a copolymer according to the present invention.
Figure 10 shows the accelerated cyclic electrochemical technique (ACET) results for pre-damaged 30 µm thick coating with a copolymer according to the present invention.

### Examples:

### Synthesis of poly(phenylene methylene) catalyzed by complexes based on W and Mo

The polymerizations of benzyl chloride were carried out with a monomer to catalyst ratio of about 0.1% mol/mol for each catalyst. Although the polymerization conditions are essentially based on procedures already reported in the literature from Brändle et al. (Journal of Polymer Science, 2018, 56, 309ff)the reaction temperature had to be modified for the catalytic systems applied here, independently on time constraints, from room temperature to 80°C, 120°C, 160°C and 180°C in order to mitigate the viscosity increase and allow an efficient mixing over the course of the reaction. Below the example of the polymerization catalysed by [WCl₄(THF)₂] is provided. The stabilizer propylene oxide present in the starting material was removed from benzyl chloride under reduced pressure (≈10⁻² bar) overnight. In a 50 mL three neck flask, 20 g of benzyl chloride (20.8 mL, 0.16 mol) were added to the solid catalyst [WCl₄(THF)₂] (70 mg, 0.1 mmol) under nitrogen atmosphere keeping a constant gas flow of 15 mL min⁻¹. The crude of reaction was then let under mechanical stirring for 3 h in order to assure a good mixing between the catalyst and the monomer. Over the course of reaction the temperature was risen from 25 °C to 180 °C in order to enable mixing upon the increase of viscosity due to the molar mass increase. As the reaction was complete, the molten polymer was allowed to cool down to room temperature. The product was purified by dissolving the polymer in 30 mL of chloroform and then pouring the solution into 600 mL of methanol. The suspension was let at vigorous stirring for 3 h. The obtained PPM powder was then filtered over cellulose filter and the polymer powder was dried under vacuum (≈10⁻² bar) over night. 6.3 g of pale-yellow polymer were obtained (yield 66%). ¹H NMR (300 MHz, CDCl₃, δ in ppm): 3.79 (broad, 2H), 7 (broad, 4H). GPC (THF). Molar masses are given in Table 1 and the ¹³C NMR spectrum is shown below.

The synthesis with the catalysts [WCl₄(MeCN)₂], [WBr₂(CO)₃(dme)], [Mol₂(CO)₃(MeCN)₂] was performed analogously. The yields of purified PPM polymers amounted to 68% - 77 % and are indicated in Table 1 together with the molar masses.

**Table 1. Number average molar mass (Mₙ), weight average molar mass (M_{w}), polydispersity index (PDI) and yield of reaction of the polymers synthesized with the W- and Mo-based catalysts.**

| **Catalyst** | **Mₙ (g mol⁻¹)** | **M_{w} (g mol⁻¹)** | **PDI** | **Yield of reaction** |
|---|---|---|---|---|
| [WCl₄(MeCN)₂] | 3,118 | 7,013 | 2.2 | 68% |
| [WBr₂(CO)₃(dme)] | 3,325 | 13,170 | 3.9 | 72% |
| [Mol₂(CO)₃(MeCN)₂] | 4,538 | 11,480 | 2.5 | 77% |
| [WCl₄(THF)₂] | 4,090 | 63'760 | 15.6 | 69% |

### Synthesis of a poly(phenylene methylene) based copolymer catalyzed by WCI₄(THF)₂

PPM with durene units was synthesized in presence of 0.5% mol/mol 1,4-bis(chloromethyl)-2,3,5,6-tetramethylbenzene (3.6-bis(chloromethyl)durene, BCMD) as described above with [WCl₄(THF)₂] (75 mg, 0.16 mmol) as catalyst, however, by adding 172 mg of BCMD (7.4·10⁻¹ mmol) to 17 mL benzyl chloride (148 mmol). The evolution of color during the reaction was as follows: clear yellow brown for the first minute, black at 80 °C, blue at 120 °C, and dark green at 160 °C. After sample work-up as described above for PPM, a quantity of 6.63 g (82%) of green bluish product was obtained. ¹H NMR (300 MHz, CDCl₃, δ in ppm): 2.5 (s, 0.12H, CH₃) 3.71 (br, 2H, CH₂), 7.19 (br, 4H, Ar); GPC (CHCl₃ *M*ₙ = 3,400 g mol⁻¹, weight average molar mass (*M*_{w}) = 211,977 g mol⁻¹, *M*_{w}/*M*ₙ = 55.4; DSC (*T*_{g}): 52.0 °C.

### Fractionation by Phase Separation

The copolymer (1 g) (*M*ₙ = 3,317 g mol⁻¹, *M*_{w} = 183,600 g mol⁻¹) and 2-butanone (23 mL) were stirred vigorously for 2 h after which the suspension separated into a clear upper phase with the low molar mass polymer (F_{low}) and a turbid oily phase with high molar mass polymer (F_{medium}). The upper and the lower phases were separated, and the solvent was removed by a rotary evaporator, and then dissolved again in 5 mL of chloroform. The solutions were precipitated in 200 mL of methanol under stirring, and the solids were filtered and dried (as described above), to give 0.452 g (fractionation yield 45%) of F_{medium} (*M*ₙ= 33,520 g mol⁻¹, *M*_{w}= 322,000 g mol⁻¹) (when the fractionation procedure was repeated twice, it was not possible to isolate higher molar mass fractions). Thereafter, 50 mg of F_{medium} were further washed with 5 mL of a mixture of chloroform/2-butanone (1:1 by volume) in order to remove lower molar mass fractions and to provide the polymer fraction F_{high} (23 mg, fractionation yield 46%) (Mₙ= 205,300 g mol⁻¹, M_{w}= 777,900 g mol⁻¹).

### Characterization

¹H NMR and ¹³C NMR spectra were recorded on a Bruker AV300 MHz spectrometer using CDCl₃ as solvent. The multiplicity of peaks is indicated as (bs) for broad signals, (s) singlet, (d) doublet, (t) triplet and (m) multiplet. The monomer conversion χ was evaluated by withdrawing aliquots of the reaction mixtures during the reaction to be analyzed by ¹H NMR spectroscopy according to the literature. The molar masses were investigated by gel permeation chromatography (GPC) using a Viscotek GPC system using tetrahydrofuran (THF) as eluent. The GPC module comprised a pump and degasser system (GPCmax VE2001; 1.0 mL min⁻¹ flow rate), Viscotek 302 TDA as detector and two columns for the analysis of different molar masses (2× PLGel Mix-B; dimensions 7.5 mm × 300 mm). The thermal characterization was performed with a TGA/DSC 3+ module (Mettler Toledo). The thermal transitions were investigated from 25 °C to 360 °C under nitrogen flush (50 mL min⁻¹), increasing the temperature with a rate of 10 °C min⁻¹. The onset of decomposition was evaluated in a temperature range of 25 °C to 900 °C under air flush (50 mL min⁻¹) with a temperature increasing rate of 10 °C min⁻¹.

### Evaluation of the catalytic activity in homo-polymerization of benzyl chloride

The screening of [WCl₄(MeCN)₂], [WCl₄(THF)₂], [WBr₂(CO)₃(dme)] and [Mol₂(CO)₃(MeCN)₂] as catalysts for the bulk polymerization of benzyl chloride was performed keeping the same molar ratio catalyst/monomer (0.1% mol/mol) for all the compounds. Before the temperature increase and start of the reactions, the catalysts were let to dissolve in benzyl chloride at room temperature. Due to the different solubility of each catalyst in benzyl chloride, dissolution times in the range of minutes were observed for [Mol₂(CO)₃(MeCN)₂] and [WBr₂(CO)₃(dme)], while for W(IV)-based catalyst 4 h were needed. The temperature of the reaction was then adjusted over the course of polymerization to avoid mixing problems arising by the increase of viscosity (i.e. the Weissenberg effect). The temperature required for polymerization and the consequent monomer conversion strongly depended on the compound. In particular, the polymerization in presence of [Mol₂(CO)₃(MeCN)₂] was triggered already at 80 °C, reaching quickly (10 min) a monomer conversion of about 90%. When [WCl₄(MeCN)₂] was employed, the monomer conversion raised significantly between 80°C to 120°C settling above 80% after 5 h at this temperature. Previously reported W(II)-based catalysts also showed catalytic activity below 120 °C, By contrast, polymerization catalyzed by [WCl₄(THF)₂] or [WBr₂(CO)₃(dme)] were initiated only at temperatures at or above 150 °C.

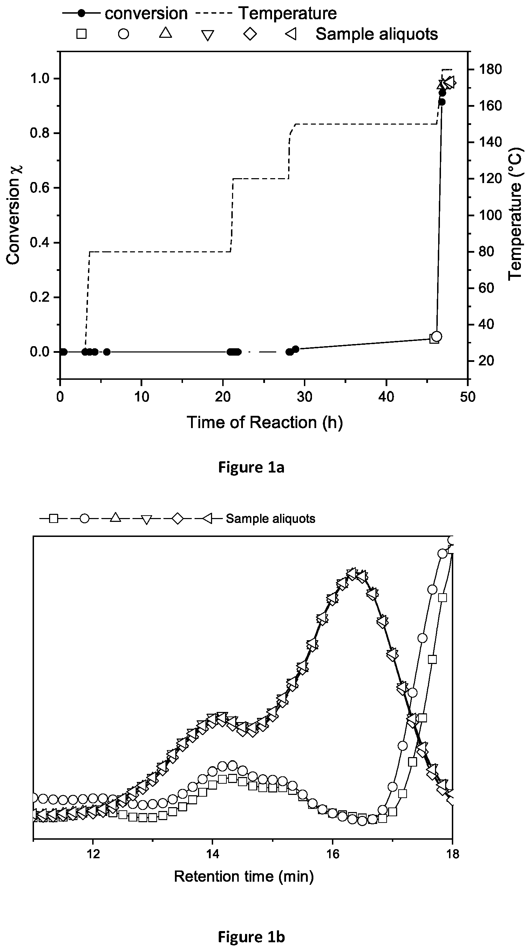

The monomer conversion of the polymerization catalyzed by [WBr₂(CO)₃(dme)] reached 100% after 5 h at 150°C. Notably, at this temperature no striking increase of viscosity was observed, probably due to the low molar mass of the obtained polymer. On the other hand, the monomer conversion at 150 °C of the polymerization catalyzed by [WCl₄(THF)₂] settled below 10% after 17 h. The rise of the temperature to 180 °C was crucial in order to increase the monomer conversion and complete the reaction as evident from Figure 1a which shows the monomer conversion obtained from ¹H NMR spectra of aliquots removed from the reaction mixture. Figure 1b displays the GPC chromatograms of the aliquots sampled after various monomer conversions. Those chromatograms disclose that upon triggering of the reaction at 150 °C at the monomer conversion of 2%, a bimodal molar mass distribution with a peak at 15.4 min corresponding to a molar mass between 4,500 g mol⁻¹ and 63,000 g mol⁻¹ and a smaller peak at 16.6 min (below 4,480 g mol⁻¹) emerged. After 17 h at this temperature, the two peaks shifted to lower retention times, 14.3 min and 15.4 min, both in the molar mass range between 4,000 g mol⁻¹ and 500,000 g mol⁻¹. Those chromatograms showed a tail after 17 min corresponding to monomer and oligomers still present in the reaction batch at this degree of monomer conversion. As the temperature was increased up to 180 °C, the oligomer fractions grew faster with respect to the high molar mass fraction reflecting a rise of the peak at 16.3 min and thus a pronounced decrease of *M*ₙ as the monomer conversion increased (Figure 1b). The opposite was observed for other tungsten-based catalysts.

The presence of high molar masses at low monomer conversions indicates that in presence of [WCl₄(THF)₂] a chain-growth-like mechanism is involved (a chain-growth-like processes was also reported for other tungsten-based catalysts). By contrast, such an effect was not observed in the polymerizations using [WCl₄(MeCN)₂], [WBr₂(CO)₃(dme)] and [Mol₂(CO)₃(MeCN)₂].

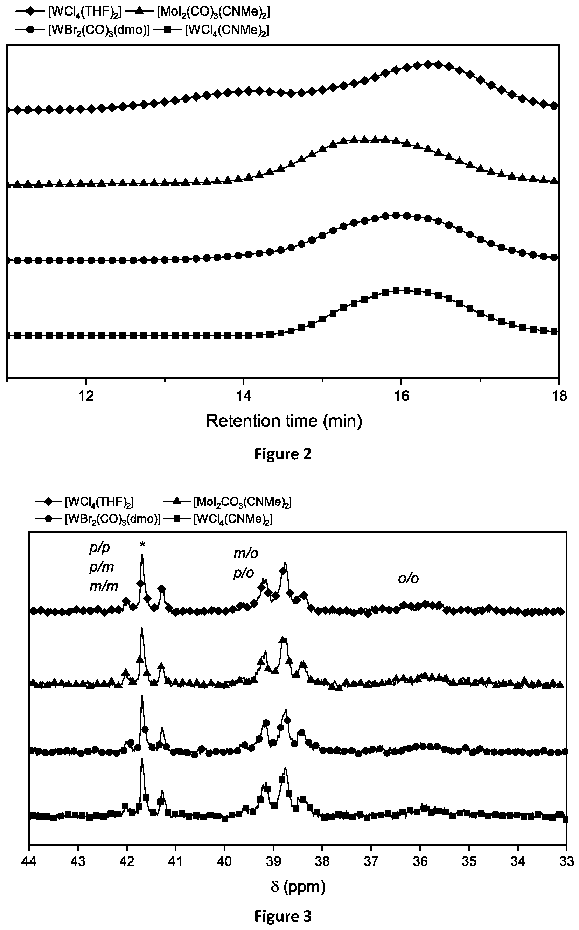

After isolation of the polymers by dissolution and subsequent precipitation, the polymers resulting from [WCl₄(MeCN)₂], [WBr₂(CO)₃(dme)] and [Mol₂(CO)₃(MeCN)₂] catalysts (Figure 2) exhibited a monomodal molar mass distribution with *M*ₙ between 3,100 g mol⁻¹ and 4,500 g mol⁻¹ and M_{w} between 7000 g mol⁻¹ and 13,000 g mol⁻¹ (Table 1), which lies in the conventional range of PPM (see Introduction). However, the PPM obtained using [WCl₄(THF)₂] revealed a bimodal molar mass distribution (Figure 2), presenting a *M*ₙ of 4,090 g mol⁻¹ in coherence with the other catalysts, but a higher M_{w} (63,760 g mol⁻¹) and thus much higher PDI (15.6) (Table 1).

**Table 2. Number average molar mass (Mₙ), weight average molar mass (M_{w}), polydispersity index (PDI) and yield of reaction of the polymers synthesized with the W- and Mo-based catalysts.**

| **Catalyst** | **Mₙ (g mol⁻¹)** | **M_{w} (g mol⁻¹)** | **PDI** | **Yield of reaction** |
|---|---|---|---|---|
| [WCl₄(MeCN)₂] | 3,118 | 7,013 | 2.2 | 68% |
| [WBr₂(CO)₃(dme)] | 3,325 | 13,170 | 3.9 | 72% |
| [Mol₂(CO)₃(MeCN)₂] | 4,538 | 11,480 | 2.5 | 77% |
| [WCl₄(THF)₂] | 4,090 | 63'760 | 15.6 | 69% |

Among the investigated catalysts, the Mo(II)-based complex and [WCl₄(THF)₂] led to an *M*ₙ which was 25% - 30% above that of the other tungsten catalysts. However, we consider this and the higher *M*_{w} obtained with [WCl₄(THF)₂] as a specific effect of the applied compounds and not as a general property of molybdenum- or W(IV)-based catalysts, all the more as the catalysts have different operation temperatures.

The ¹³C NMR spectra of purified PPMs correspond to those of PPM reported with other catalysts. The signals in the range of 33 ppm - 44 ppm (Figure 3) are attributed to the substitution patterns along the PPM backbone, as reported previously (the ¹³C NMR signals in the aromatic region between 125 ppm and 145 ppm are shown in the Supporting Information (SI. 1)). The ¹H NMR spectra (Supporting Information (SI.2)) show the broad peak at 3.7 ppm of the methylene region and the broad peak between 6.5 and 7.25 ppm of the phenylene group for each polymer, as also reported for PPM obtained using SnCl₄ or W(II)-based catalysts.

The obtained polymers were investigated with differential scanning calorimetry (DSC) and thermogravimetric analysis (TGA). All the polymers showed high thermal stability presenting an onset of decomposition temperatures above 400 °C. Moreover, glass transition temperatures in the range of 58 °C - 63°C were found and no further 1^{st} order thermal transitions were detected. Thus, the thermal properties of the obtained polymers are in agreement with the data reported for PPM obtained by other catalysts such as SnCl₄ or W(II)-based complexes (*T*_{g} 60 °C - 65°C, onset of decomposition above 400 °C).

### Effect of α,α' bis-chloromethyl durene on connectivity

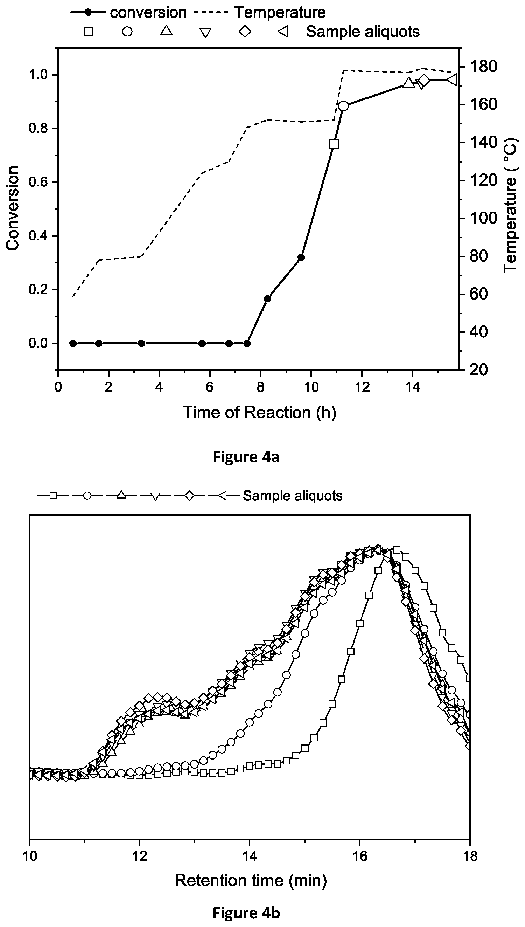

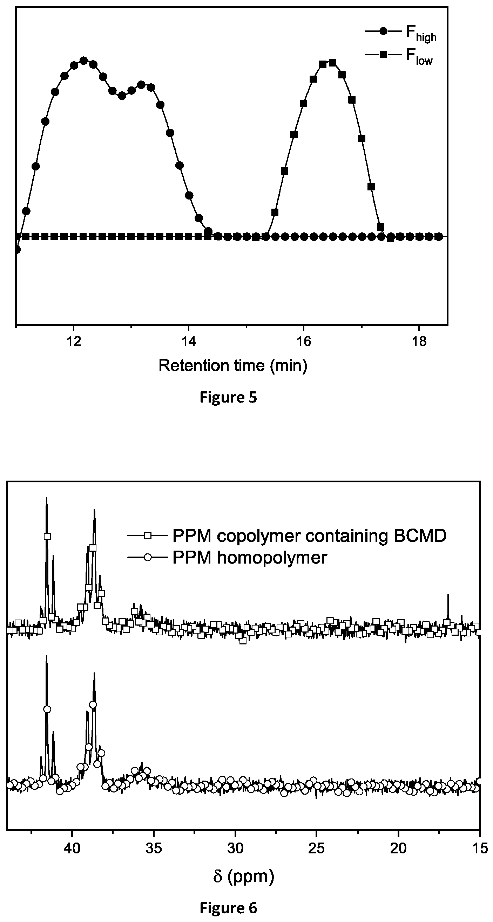

Based on the results obtained with the above catalysts, [WCl₄(THF)₂] was selected in order to enhance the molar mass with the bifunctional branching agent BCMD as co-monomer, since [WCl₄(THF)₂] provided the highest *M*_{w}. As evident from Figure 4a, the presence of BCMD (0.5% mol/mol) did not affect the initiation temperature of the polymerization (no reaction below 150 °C) but as the temperature of 150 °C was reached, the reaction became faster than in the homopolymerization. While in case of the homopolymerization the monomer conversion did not grow above 10% at 150 °C, at the same temperature the monomer conversion in presence of BCMD reached 70%, accompanied with an increase of viscosity reflected in the observation of the Weissenberg effect. Therefore, to ensure a correct mixing in the polymerization batch the temperature was raised to 180 °C until complete monomer conversion. The chromatograms displayed in Figure 4b show again a multimodal distribution of the molar masses emerging over the course of polymerization, with a general shift of the peaks to higher molar masses. Notably, differently to the homopolymerization, in presence of the branching agent the intensity of the high molar mass peak at 12 min (*M*ₙ 914,800 g mol⁻¹) increased with increasing monomer conversion. Although the overall *M*ₙ (3,400 g mol⁻¹) did not change strikingly, *M_{w}* (212,000 g mol⁻¹) increased by a factor of 4 with respect to the homopolymerization. The product with BCMD was isolated by dissolution and subsequent precipitation as the corresponding homopolymer described above. Compared to the in-situ product, the isolated product possessed essentially the same *M*ₙ (3,400 g mol⁻¹) but a slightly lower *M_{w}* (187,900 g mol⁻¹). On the other hand, the *M*_{w} was 3.8 times higher than that of the product without BCMD, revealing a higher fraction of high molar mass product obtained with BCMD. In order to separate the highest molar mass fractions, the obtained polymer was dissolved in 2-butanone resulting in a spontaneous separation corresponding to a lower molar mass fraction (F_{low}) and a higher molar mass fraction (F_{medium}), as reported elsewhere for fractionation of PPM. Moreover, further extraction of lower mass polymers in the F_{medium} fraction was performed with a chloroform:2-butanone 1:1 (by volume) mixture to yield the fraction F_{high} The results of fractionation are shown in Table 3. The *M*ₙ of F_{medium} (33,520 g mol⁻¹) is an order of magnitude above the value before fractionation and also of the values commonly obtained for PPM (see Introduction). The *M*ₙ of the fraction F_{high} (205,300 g mol⁻¹) even exceeds the highest molar mass of a PPM isolated so far (167,900 g mol⁻¹, also obtained by fractionation). The GPC diagram (Figure 5) also reveals that the lowest molar masses (F_{low}) were completely separated from the fraction with the highest molar mass (F_{high}). It is also evident from Figure 5 that F_{high} consists of a bimodal molar mass distribution with two peaks representing molar masses of 872,000 g mol⁻¹ and 122,200 g mol⁻¹ (12 min and 13.5 min in the GPC diagram). However, our attempts to separate these two fractions to obtain a fraction with ultrahigh molar mass failed.

**Table 3. Number average molar mass (Mₙ), weight average molar mass (M_{w}), polydispersity index (PDI), yield of fractionation and polymer fraction composition resulting from polymerization of benzyl chloride with 0.5% mol/mol BCMD catalyzed by [WCl₄(THF)₂], yielding the fraction F_{low}, F_{medium}, F_{high} (see text).**

| **Fraction** | **Mn (g mol-1)** | **M_{w} (g mol⁻¹)** | **PDI** | **Yield of first fractionation (%)** | **Yield of second fractionation (%)** |
|---|---|---|---|---|---|
| **F_{low}** | 1,821 | 3,794 | 2.1 | 55 | |
| **F_{medium}** | 33,520 | 322,100 | 9.6 | 45 | 54 |
| **F_{high}** | 205,300 | 772,900 | 3.7 | | 46 |

The main difference between the products obtained with and without BCMD in ¹³C NMR spectra was the rise of a peak at 16.5 ppm (Figure 6) corresponding to the signal of methyl groups belonging to the durene unit, confirming that durene units were incorporated in the polymer chains. The ¹³C NMR spectra in the methylene region (30 ppm - 42 ppm) showed slight differences of the substitution patterns between the copolymer and the homopolymer (Figure 6). Essentially, the relative intensity of the *ortho-ortho* substitution pattern increased somewhat. In ¹H NMR spectra the distinctive signals of PPM emerged (broad peak at 3.7 ppm and in the range of 6.8-7.2 ppm) and a peak at 2.5 ppm which is attributed to the methyl groups in the durene framework. The integration of the NMR signals revealed a concentration of durene units of about 0.4% mol/mol with respect to phenylene units, which is slightly lower than in the initial reaction mixture. This could be in the context of the work-up procedure of the sample. The thermal properties of PPM-D (T_{g} 65 °C, onset of decomposition at 410 °C) were similar to those of PPM.

### Comparison of 4-octyloxy copolymer and tetramethyl copolymers

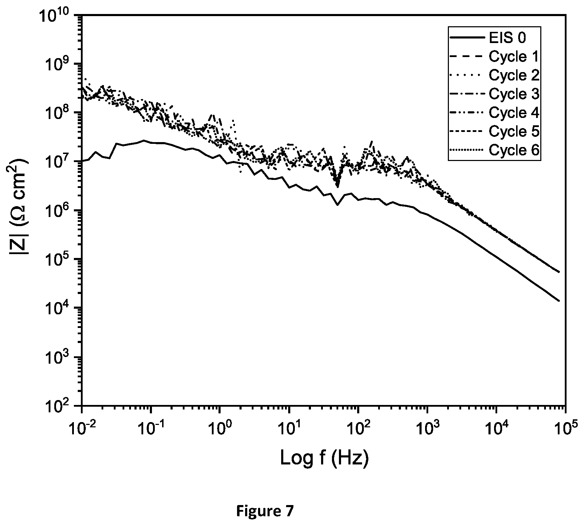

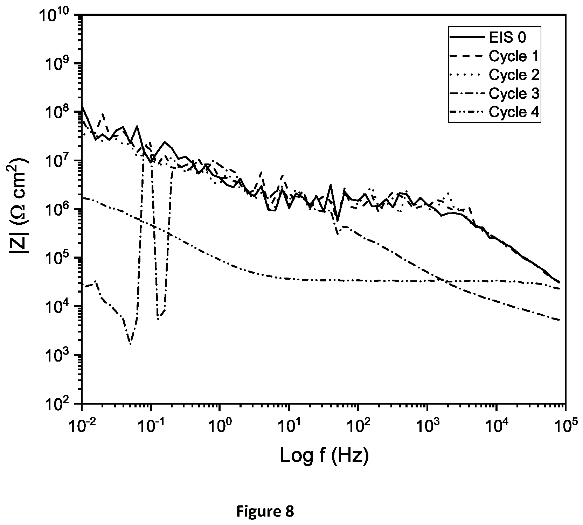

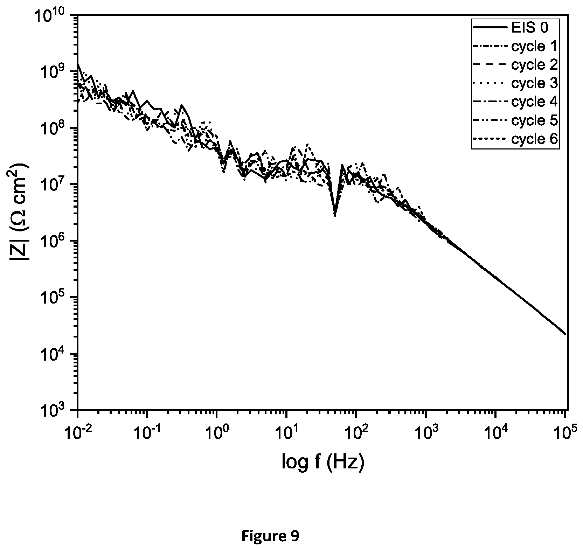

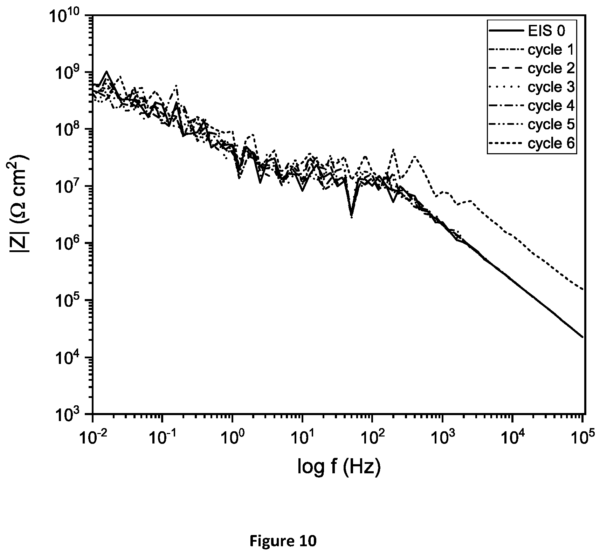

The comparison between coatings made by PPM co-polymers containing 4-octyloxy side chains and coating of PPM copolymer containing BCMD was performed according to the rule ISO 17463:2014 (procedure reported below). However, the thicknesses of the two kind of coatings tested were not equivalent as the copolymer disclose from D'Elia *et al.* is only processable by hot-pressing (only thicker films can be obtained). Therefore, the thickness of the coatings of the prior art are 30 µm while those of the novelty obtained by spray coating are only 20 µm. Those tests revealed for coating containing octyloxy side chains a |Z|_{0.01Hz} of 10⁷ Ω cm² during the preliminary EIS cycle. Over the following ACET cycles an increase of |Z|_{0.01Hz} is observe settling to values higher than 10⁸ Ω cm² (Figure 7). Despite the good corrosion protection ability of this coating, the increase of |Z|_{0.01Hz} after the preliminary EIS would be attributed to the progressive saturation of the porosities on the coating surface reflecting the presence of inhomogeneities within the polymeric film. The criticalities of this kind of coating became predominant when a pre-damaged surface is exposed to the ACET test (Figure 8). Although after the damaging the coating presents a good anticorrosion protection (values of |Z|_{0.01Hz} included between 10⁷ and 10⁸ Ω cm² in the first two ACET cylces) after the third cycle the coating fails (|Z|_{0.01Hz} about 10⁴ Ω cm²) with consequent development of corrosion products. The ACET test carried out on coating surface made by PPM copolymer obtained using BCMD displayed high corrosion protection (despite being 1/3 thinner than the previous one) and high surface homogeneity reflected by |Z|_{0.01Hz} well above 10⁸ Ω cm² (Figure 9). As reported in Figure 10 the ACET performed on the pre-damaged surface revealed that this coating possesses a high protection ability even after damage. This would be attributed to a better self-healing.

### Preparation of coatings

Sheets of 12 cm in length, 3 cm in width and 4 mm in thickness of high strength aluminum alloy AA2024 (4.3%-4.5% copper, 1.3%-1.5% magnesium, 0.5%-0.6% manganese and less than 0.5% of other elements) were provided by Aviometal s.p.a (Varese, Italy) and used as substrate. Samples of 4 cm in length were cut and subsequently polished with abrasive papers of 300, 500, 800, 1200, and 4000 grit. Immediately after polishing, the samples were cleaned by immersion in ethanol in an ultrasonic bath (Banderlin, Berlin, Germany) for 5 min. Then AA2024 samples were removed from the ethanol bath and the residual alcohol at the surface was evaporated by means of a flush of nitrogen.

A layer of benzyltriethoxysilane was applied by spin coating (3500 rpm, 30 s) on freshly cleaned AA2024 samples and subsequently heated up to 100 _{°}C for 1 min, whereupon condensation of benzyltriethoxysilane to respective polysiloxanes proceeded.

Coatings of the copolymers were manufactured by pressing polymer powders onto these silane-pretreated AA2024 specimen, using polyetheretherketone (PEEK) foil to separate the PPM-based polymers from the pressing instrument. Pressing was performed for octyloxy copolymers -prior art- (13.4% mol/mol) at a temperature of 120°C for 30 s. The thickness was between 30 µm and 50µm. Coatings appeared very uniform and homogeneous although no rheological additive was added. BCMD copolymer coating - novelty- was obtained dissolving BCMD copolymer in chloroform to obtain a 0.37 g/mL solution. Then the solution was formulated with p-xylene with a ratio 3.9 mL/mL (p-xylene/polymer solution). The formulation was applied on a non-pretreated AA2024 surface at 120°C via spray coating with a pressure of 0.5 bar.

### Electrochemical Characterization of Coated AA2024

The anticorrosion ability of coating was studied by means of electrochemistry techniques, carrying out tests on AA2024 samples coated with the two copolymers (octyloxy -prior art-13.4% mol/mol and BCMD -novelty- 0.4 % mol/mol).

Electrochemical corrosion tests were conducted in a naturally aerated near-neutral simulated marine environment prepared by dissolving 0.6 mol L⁻¹ sodium chloride (≥99.0%, Sigma-Aldrich) in MilliQ^{®} water. The pH value was adjusted to 6.7 ± 0.1 by adding few drops of 0.2 mol L⁻¹ sodium hydroxide solution to the stock solutions. All the experiments, if not otherwise stated, were carried out at ambient temperature (24 ± 3°C, with a variation lower than 2°C during each single run). In all cases, the operative temperature was below the glass transition temperature of the copolymer according to the present invention.

The apparatus used for the measurements consisted of a glass cell with a hole (1 cm in diameter) in the middle of the flat bottom part which assures the contact between the coated metallic plate (working electrode, exposed area 0.78 cm²) and the working solution (0.6 M NaCl). The sealing was guaranteed by a bi-adhesive layer (a2 Soluzioni Adesive, Italy) pressed between the sample and the bottom of the cell. The electrochemical setup also included a platinum coil as counter electrode and an aqueous saturated calomel electrode as reference one (E_{SCE} = 0.242 V vs. SHE). The latter was inserted into a glass double bridge (filled with the same working solution) ending with a Luggin capillary aimed to minimize the ohmic drop between working and reference electrode. No instrumental compensation of the residual ohmic drop was performed.

The electrochemical characterization included both potentiodynamic and potentiostatic methods. The former consisted of an anodic polarization scan, sweeping the potential from OCP to 2.5 V vs. SCE, at a scan rate of 10 mV min⁻¹ (each run lasting ca. 5.5 h). A limit current density of 4 mA cm⁻² was imposed, thereafter the scan was automatically aborted independently by the achievement of the final potential. The second characterization implies the application of a constant potential to the metallic sample and the recording of the current flow between working and counter electrode. In our experiments, an oxidizing potential of 0 V vs. SCE was applied for 24 h.

Potentiodynamic and potentiostatic curves were recorded after an initial delay time of 600 s for assuring the equilibration of the system at OCP. Some potentiodynamic curves were recorded also at a fixed temperature of 35 _{°}C, just above the glass transition temperature of the copolymer according to the present invention. For these experiments, a suitable cell surrounded by a jacket filled by a flux of water controlled by a thermostat (Haake CH Fisons coupled to a Haake F3 Fision) was adopted.

For accelerated scanning electrochemical technique (ACET), after a conditioning of 10 minutes at the open circuit potential (OCP) a preliminary control electrochemical impedance spectroscopy (EIS) is performed. A following sequence of polarization-relaxation-EIS was repeated at least six times, one after the other, according to the international standard ISO 17463:2014. The EIS analyses were conducted in the frequency range from 100 kHz to 0.01 Hz using a sinusoidal voltage of 10 mV as amplitude at the open circuit potential (OCP). The following cathodic polarization step was performed at - 2 V vs. SCE for 20 minutes; the relaxation process at the OCP lasted 3 hours; then a new EIS step was carried out using the same mentioned parameters. The intrinsic self-healing and the anticorrosion performance of PPM copolymer coatings were also investigated by using accelerated cyclic electrochemical technique, applying an artificial circular scratch (diameter of the hole 0.52 mm, depth corresponding to the coating thickness) during the already mentioned conditioning time. The evaluation of impedance modulus at the lowest frequency 0.01 Hz (|Z|_{0.01Hz}) provides the impedance of the coating. High values of |Z|_{0.01Hz} (>10⁷ Ω cm²) reflect high corrosion protection.

## Claims

1. Copolymer obtained by reacting in the presence of a Lewis acid catalyst
a first monomer of the general formula (I) 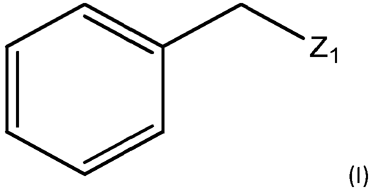 wherein Z₁ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃), and
a second monomer of the general formula (II) 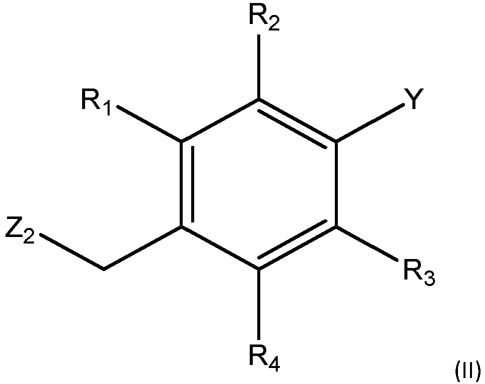 wherein
Z₂ is selected from the group consisting of
fluoro, chloro, bromo, iodo, hydroxyl, toluene-4-sulfonyloxy (-O-SO₂-C₆H₄-CH₃) and methylsulfonyloxy (-O-SO₂-CH₃),
Y is selected from the group consisting of
-CH₂Z₃,
wherein Z₃ is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃),
a linear or branched C₁-C₃₀ alkyl, a linear or branched C₂-C₃₀ alkenyl, a linear or branched C₂-C₃₀ alkynyl, sulfo (-SO₃H), nitro, amino, hydroxy,
-NHCOR₅, -CONHR₆, -OCOR₇, -COOR₈ and -OR₉,
wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl; and
R₁, R₂, R₃ and R₄ are independently from each other selected from the group consisting of
linear or branched C₁-C₃₀ alkyl, a linear or branched C₂-C₃₀ alkenyl, a linear or branched C₂-C₃₀ alkynyl, sulfo (-SO₃H), nitro, amino, hydroxy, oligo(C₂ to C₄-alkylene glycol),-NHCOR₅, -CONHR₆, -OCOR₇, -COOR₈ and -OR₉,
wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl.

2. Copolymer according to claim 1, wherein the second monomer has the general formula (lla) 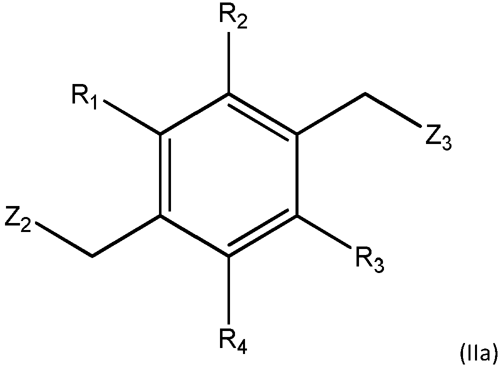 wherein
Z₂ is selected from the group consisting of
fluoro, chloro, bromo, iodo, hydroxyl, toluene-4-sulfonyloxy (-O-SO₂-C₆H₄-CH₃) and methylsulfonyloxy (-O-SO₂-CH₃),
Z₃ is selected from the group consisting of
fluoro, chloro, bromo, iodo, hydroxyl, toluene-4-sulfonyloxy (-O-SO₂-C₆H₄-CH₃) and methylsulfonyloxy (-O-SO₂-CH₃); and
R₁, R₂, R₃ and R₄ are independently from each other selected from the group consisting of
linear or branched C₁-C₃₀ alkyl, linear or branched C₂-C₃₀ alkenyl, linear or branched C₂-C₃₀ alkynyl, sulfo (-SO₃H), nitro, amino, hydroxy, oligo(C₂ to C₄-alkylene glycol),-NHCOR₅, -CONHR₆, -OCOR₇, -COOR₈ and -OR₉,
wherein R₅, R₆, R₇, R₈ and R₉ are selected from the group consisting of a linear or branched C₁-C₃₀ alkyl, a linear or branched C₂-C₃₀ alkenyl and a linear or branched C₂-C₃₀ alkynyl.

3. Copolymer according to claim 1 or claim 2, wherein Z₂ and Z₃ are the same.

4. Copolymer according to any of the preceding claims, wherein Z₁, Z₂ and Z₃ are the same, preferably chloro.

5. Copolymer according to any of the preceding claims, wherein R₁, R₂, R₃ and R₄ are the same, preferably methyl.

6. Copolymer according to any of the preceding claims, wherein the copolymer comprises one or more additional monomer of the general formula (III) 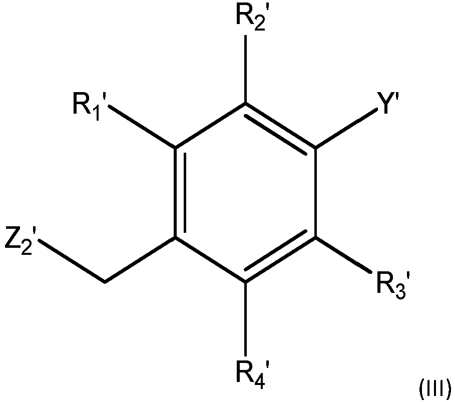 wherein
Z₂' is selected from the group consisting of
fluoro, chloro, bromo, iodo, hydroxyl, toluene-4-sulfonyloxy (-O-SO₂-C₆H₄-CH₃) and methylsulfonyloxy (-O-SO₂-CH₃),
Y' is selected from the group consisting of
-CH₂Z₃',
wherein Z₃' is selected from the group consisting of fluoro, chloro, bromo, iodo, hydroxyl, toluene-4-sulfonyloxy (-O-SO₂-C₆H₄-CH₃) and methylsulfonyloxy (-O-SO₂-CH₃);
a linear or branched C₁-C₃₀ alkyl, a linear or branched C₂-C₃₀ alkenyl, a linear or branched C₂-C₃₀ alkynyl, sulfo (-SO₃H), nitro, amino, hydroxy,
-NHCOR₅', -CONHR₆', -OCOR₇', -COOR₈' and -OR₉',
wherein R₅', R₆', R₇, R₈' and R₉' are selected from the group consisting of a linear or branched C₁-C₃₀ alkyl, a linear or branched C₂-C₃₀ alkenyl and a linear or branched C₂-C₃₀ alkynyl; and
R₁', R₂', R₃' and R₄' are independently from each other selected from the group consisting of
a linear or branched C₁-C₃₀ alkyl, a linear or branched C₂-C₃₀ alkenyl, a linear or branched C₂-C₃₀ alkynyl, sulfo (-SO₃H), nitro, amino, hydroxy, oligo(C₂ to C₄-alkylene glycol), -NHCOR₅', -CONHR₆', -OCOR₇', -COOR₈' and -OR₉',
wherein R₅', R₆', R₇', R₈' and R₉' are selected from the group consisting of a linear or branched C₁-C₃₀ alkyl, a linear or branched C₂-C₃₀ alkenyl and a linear or branched C₂-C₃₀ alkynyl, and
wherein
the monomer of the general formula (III) is different from the monomer of the general formula (II).

7. Copolymer according to any of the preceding claims, wherein the compound of formula II and IIa at least one of R₁, R₂, R₃ and R₄ is selected from the group consisting of a linear or branched C₈-C₃₀ alkyl, a linear or branched C₈-C₃₀ alkenyl, a linear or branched C₈-C₃₀ alkynyl and -OR₉, wherein R₉ is selected from the group consisting of a linear or branched C₈-C₃₀ alkyl, a linear or branched C₈-C₃₀ alkenyl and a linear or branched C₈-C₃₀ alkynyl.

8. Copolymer according to any of the preceding claims, wherein the copolymer comprises 0.01 to 5% (mol/mol), preferably 0.1 to 1% (mol/mol) and most preferably 0.5 % (mol/mol) of monomer of the general formula (II).

9. Method for preparing a copolymer according to any of the preceding claims, wherein the monomer of the general formula (I) and the monomer of the general formula (II) are copolymerized in the presence of a Lewis acid catalyst.

10. Method according to claim 9, wherein the catalyst is selected from the group consisting of bismuth(III)-based catalyst, molybdenum-based catalyst and tungsten-based catalyst, preferably selected from the group consisting of WCl₄(MeCN)₂, WCl4(THF)₂, WBr₂(CO)₃(dme) and Mol₂(CO)₃(MeCN)₂.

11. Method according to any of claims 9 and 10, wherein the polymerization of the monomer of the general formula (I)
is carried out in the presence of the catalyst during the whole polymerization, and
the monomer of the general formula (II) is added not before at least 40% by weight of the monomer of the general formula (I) have reacted.

12. Use of a copolymer according to any of claims 1 to 8 as coating.

13. Use of a copolymer according to any of claim 1 to 8 as corrosion protection.

14. Powder or paint comprising the copolymer according to any of claims 1 to 8.

## Patentansprüche

1. Copolymer, erhalten durch Umsetzung, in Gegenwart eines Lewis-Säure-Katalysators, eines ersten Monomers der allgemeinen Formel (I) 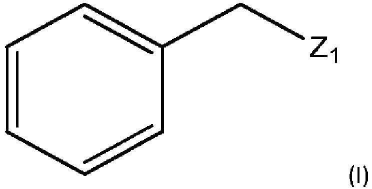
wobei Z₁ aus der Gruppe ausgewählt ist, bestehend aus Fluor, Chlor, Brom, lod, Hydroxy, Toluol-4-sulfonyloxy (-O-SO₂-C₆H₄-CH₃) und Methylsulfonyloxy (-O-SO₂-CH₃), und
eines zweiten Monomers der allgemeinen Formel (II) 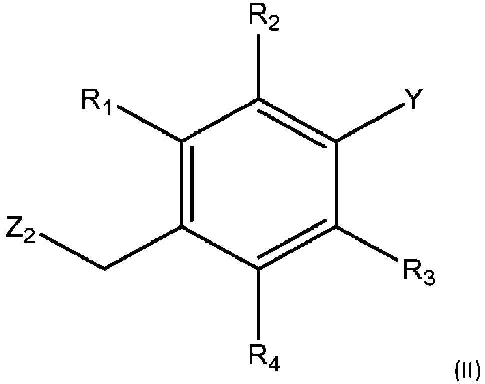
wobei
Z₂ aus der Gruppe ausgewählt ist, bestehend aus:
Fluor, Chlor, Brom, lod, Hydroxy, Toluol-4-sulfonyloxy (-O-SO₂-C₆H₄-CH₃) und Methylsulfonyloxy (-O-SO₂-CH₃),
Y aus der Gruppe ausgewählt ist, bestehend aus:
-CH₂Z₃,
wobei Z₃ aus der Gruppe ausgewählt ist, bestehend aus Fluor, Chlor, Brom, lod, Hydroxy, Toluol-4-sulfonyloxy (-O-SO₂-C₆H₄-CH₃) und Methylsulfonyloxy (-O-SO₂-CH₃),
einem linearen oder verzweigten C₁-C₃₀-Alkyl, einem linearen oder verzweigten C₂-C₃₀-Alkenyl, einem linearen oder verzweigten C₂-C₃₀-Alkinyl, Sulfa (-SO₃H), Nitro, Amino, Hydroxy,
-NHCOR₅, -CONHR₆, -OCOR₇, -COOR₈ and -OR₉,
wobei R₅, R₆, R₇, R₈ und R₉ aus der Gruppe ausgewählt sind, bestehend aus einem linearen oder verzweigten C₁-C₃₀-Alkyl, einem linearen oder verzweigten C₂-C₃₀-Alkenyl und einem linearen oder verzweigten C₂-C₃₀-Alkinyl; und
R₁, R₂, R₃ und R₄ sind unabhängig voneinander aus der Gruppe ausgewählt, bestehend aus
linearem oder verzweigtem C₁-C₃₀-Alkyl, einem linearen oder verzweigten C₂-C₃₀-Alkenyl, einem linearen oder verzweigten C₂-C₃₀-Alkinyl, Sulfa (-SO₃H), Nitro, Amino, Hydroxy, Oligo(C₂ bis C₄-Alkylenglykol),-NHCOR₅, -CONHR₆, -OCOR₇, -COOR₈ und -OR₉,
wobei R₅, R₆, R₇, R₈ und R₉ aus der Gruppe ausgewählt sind, bestehend aus einem linearen oder verzweigten C₁-C₃₀-Alkyl, einem linearen oder verzweigten C₂-C₃₀-Alkenyl und einem linearen oder verzweigten C₂-C₃₀-Alkinyl.

2. Copolymer nach Anspruch 1, wobei das zweite Monomer die allgemeine Formel (IIa) aufweist 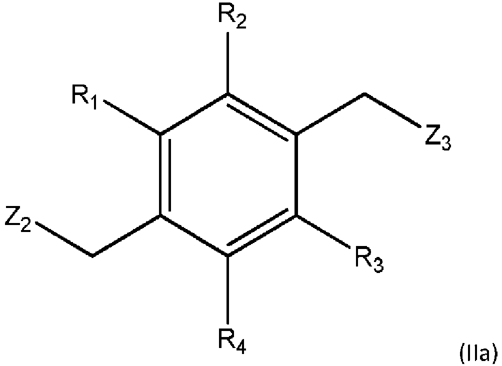 wobei
Z₂ aus der Gruppe ausgewählt ist, bestehend aus:
Fluor, Chlor, Brom, lod, Hydroxy, Toluol-4-sulfonyloxy (-O-SO₂-C₆H₄-CH₃) und Methylsulfonyloxy (-O-SO₂-CH₃),
Z₃ aus der Gruppe ausgewählt ist, bestehend aus:
Fluor, Chlor, Brom, lod, Hydroxy, Toluol-4-sulfonyloxy (-O-SO₂-C₆H₄-CH₃) und Methylsulfonyloxy (-O-SO₂-CH₃), und
R₁, R₂, R₃ und R₄ sind unabhängig voneinander aus der Gruppe ausgewählt, bestehend aus
linearem oder verzweigtem C₁-C₃₀-Alkyl, linearem oder verzweigtem C₂-C₃₀-Alkenyl, linearem oder verzweigtem C₂-C₃₀-Alkinyl, Sulfa (-SO₃H), Nitro, Amino, Hydroxy, Oligo(C₂ bis C₄-Alkylenglykol),-NHCOR₅, -CONHR₆, -OCOR₇, -COOR₈ und -OR₉, wobei R₅, R₆, R₇, R₈ und R₉ aus der Gruppe ausgewählt sind, bestehend aus einem linearen oder verzweigten C₁-C₃₀-Alkyl, einem linearen oder verzweigten C₂-C₃₀-Alkenyl und einem linearen oder verzweigten C₂-C₃₀-Alkinyl.

3. Copolymer nach Anspruch 1 oder 2, wobei Z₂ und Z₃ gleich sind.

4. Copolymer nach einem der vorhergehenden Ansprüche, wobei Z₁, Z₂ und Z₃ gleich sind, vorzugsweise Chlor.

5. Copolymer nach einem der vorhergehenden Ansprüche, wobei R₁, R₂, R₃ und R₄ gleich sind, vorzugsweise Methyl.

6. Copolymer nach einem der vorhergehenden Ansprüche, wobei das Copolymer ein oder mehrere zusätzliche Monomere der allgemeinen Formel (III) umfasst 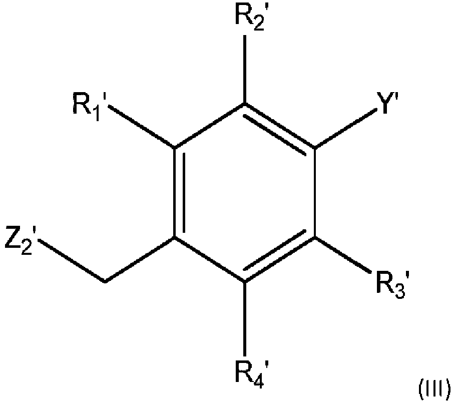 wobei
Z₂' aus der Gruppe ausgewählt ist, bestehend aus
Fluor, Chlor, Brom, lod, Hydroxy, Toluol-4-sulfonyloxy (-O-SO₂-C₆H₄-CH₃) und Methylsulfonyloxy (-O-SO₂-CH₃),
Y' aus der Gruppe ausgewählt ist, bestehend aus:
-CH₂Z₃',
wobei Z₃' aus der Gruppe ausgewählt ist, bestehend aus Fluor, Chlor, Brom, lod, Hydroxy, Toluol-4-sulfonyloxy (-O-SO₂-C₆H₄-CH₃) und Methylsulfonyloxy (-O-SO₂-CH₃),
einem linearen oder verzweigten C₁-C₃₀-Alkyl, einem linearen oder verzweigten C₂-C₃₀-Alkenyl, einem linearen oder verzweigten C₂-C₃₀-Alkinyl, Sulfa (-SO₃H), Nitro, Amino, Hydroxy,
-NHCOR₅', -CONHR₆', -OCOR₇', -COOR₈' and -OR₉',
wobei R₅', R₆', R₇', R₈' und R₉' aus der Gruppe ausgewählt sind, bestehend aus einem linearen oder verzweigten C₁-C₃₀-Alkyl, einem linearen oder verzweigten C₂-C₃₀-Alkenyl und einem linearen oder verzweigten C₂-C₃₀-Alkinyl; und
R₁', R₂', R₃' und R₄' sind unabhängig voneinander aus der Gruppe ausgewählt, bestehend aus
einem linearen oder verzweigten C₁-C₃₀-Alkyl, einem linearen oder verzweigten C₂-C₃₀-Alkenyl, einem linearen oder verzweigten C₂-C₃₀-Alkinyl, Sulfa (-SO₃H), Nitro, Amino, Hydroxy, Oligo(C₂ bis C₄-Alkylenglykol), -NHCOR₅', -CONHR₆', -OCOR₇', - COOR₈' und -OR₉',
wobei R₅', R₆', R₇', R₈' und R₈' aus der Gruppe ausgewählt sind, bestehend aus einem linearen oder verzweigten C₁-C₃₀-Alkyl, einem linearen oder verzweigten C₂-C₃₀-Alkenyl und einem linearen oder verzweigten C₂-C₃₀-Alkinyl; und
wobei
das Monomer der allgemeinen Formel (III) von dem Monomer der allgemeinen Formel (II) verschieden ist.

7. Copolymer nach einem der vorhergehenden Ansprüche, wobei die Verbindung der Formel II und IIa mindestens eines von R₁, R₂, R₃ und R₄ aus der Gruppe ausgewählt ist, bestehend aus einem linearen oder verzweigten C₈-C₃₀-Alkyl, einem linearen oder verzweigten C₈-C₃₀-Alkenyl, einem linearen oder verzweigten C₈-C₃₀-Alkinyl und -OR₉, wobei Rg aus der Gruppe ausgewählt ist, bestehend aus einem linearen oder verzweigten C₈-C₃₀-Alkyl, einem linearen oder verzweigten C₈-C₃₀-Alkenyl und einem linearen oder verzweigten C₈-C₃₀-Alkinyl.

8. Copolymer nach einem der vorhergehenden Ansprüche, wobei das Copolymer 0,01 bis 5 % (mol/mol), vorzugsweise 0,1 bis 1 % (mol/mol) und am meisten bevorzugt 0,5 % (mol/mol) Monomer der allgemeinen Formel (II) umfasst.

9. Verfahren zur Herstellung eines Copolymers nach einem der vorhergehenden Ansprüche, wobei das Monomer der allgemeinen Formel (I) und das Monomer der allgemeinen Formel (II) in Gegenwart eines Lewis-Säure-Katalysators copolymerisiert werden.

10. Verfahren nach Anspruch 9, wobei der Katalysator aus der Gruppe ausgewählt ist, bestehend aus Katalysator auf Wismut(III)-Basis, Katalysator auf Molybdänbasis und Katalysator auf Wolframbasis, vorzugsweise aus der Gruppe ausgewählt, bestehend aus WCl₄(MeCN)₂, WCl4(THF)₂, WBr₂(CO)₃(dme) und Mol₂(CO)₃(MeCN)₂.

11. Verfahren nach einem der Ansprüche 9 und 10, wobei die Polymerisation des Monomers der allgemeinen Formel (I)
in Gegenwart des Katalysators während der gesamten Polymerisation durchgeführt wird und
das Monomer der allgemeinen Formel (II) erst zugegeben wird, wenn mindestens 40 Gew.- % des Monomers der allgemeinen Formel (I) umgesetzt sind.

12. Verwendung eines Copolymers nach einem der Ansprüche 1 bis 8 als Beschichtung.

13. Verwendung eines Copolymers nach einem der Ansprüche 1 bis 8 als Korrosionsschutz.

14. Pulver oder Lack, umfassend das Copolymer nach einem der Ansprüche 1 bis 8.

## Revendications

1. Copolymère obtenu par réaction en présence d'un catalyseur acide de Lewis d'un premier monomère de formule générale (I) 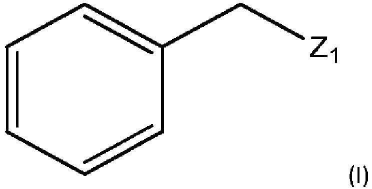
dans lequel Z₁ est choisi dans le groupe constitué par fluoro, chloro, bromo, iodo, hydroxyle, toluène-4-sulfonyloxy (-O-SO₂-C₆H₄-CH₃) et méthylsulfonyloxy (-O-SO₂-CH₃), et
un second monomère de formule générale (II) 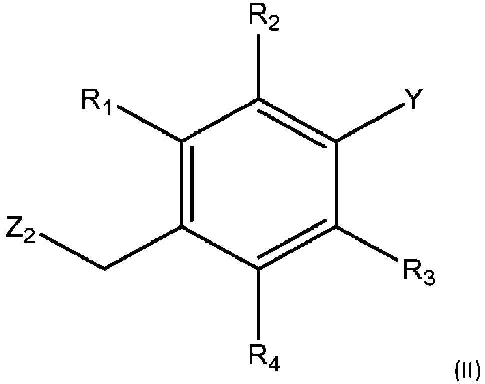
dans lequel
Z₂ est choisi dans le groupe constitué par
fluoro, chloro, bromo, iodo, hydroxyle, toluène-4-sulfonyloxy (-O-SO₂-C₆H₄-CH₃) et méthylsulfonyloxy (-O-SO₂-CH₃),
Y est choisi dans le groupe constitué par
-CH₂Z₃,
dans lequel Z₃ est choisi dans le groupe constitué par fluoro, chloro, bromo, iodo, hydroxyle, toluène-4-sulfonyloxy (-O-SO₂-C₆H₄-CH₃) et méthylsulfonyloxy (-O-SO₂-CH₃) ;
un alkyle en C₁-C₃₀ linéaire ou ramifié, un alcényle en C₂-C₃₀ linéaire ou ramifié, un alcynyle en C₂-C₃₀ linéaire ou ramifié, un sulfa (-SO₃H), un nitro, un amino, un hydroxy,
-NHCOR₅, -CONHR₆, -OCOR₇, -COOR₈ et -OR₉,
dans lequel R₅, R₆, R₇, R₈ et R₉ sont choisis dans le groupe constitué par un alkyle linéaire ou ramifié en C₁-C₃₀, un alcényle linéaire ou ramifié en C₂-C₃₀ et d'un alcynyle linéaire ou ramifié en C₂-C₃₀; et
R₁, R₂, R₃ et R₄ sont choisis, indépendamment les uns des autres, dans le groupe constitué par
un alkyle linéaire ou ramifié en C₁-C₃₀, un alcényle linéaire ou ramifié en C₂-C₃₀, un alcynyle linéaire ou ramifié en C₂-C₃₀, un sulfa (-SO₃H), un nitro, un amino, un hydroxy, un oligo (alkylène glycol en C₂-C₄), -NHCOR₅, -CONHR₆, -OCOR₇, -COOR₈ et -OR₉,
dans lequel R₅, R₆, R₇, R₈ et R₉ sont choisis dans le groupe constitué par un alkyle linéaire ou ramifié en C₁-C₃₀, un alcényle linéaire ou ramifié en C₂-C₃₀ et un alcynyle linéaire ou ramifié en C₂-C₃₀.

2. Copolymère selon la revendication 1, dans lequel le second monomère a la formule générale (IIa) 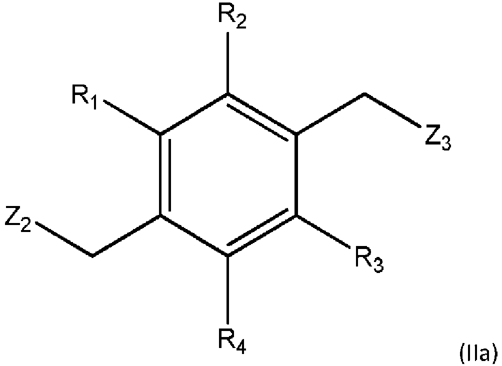 dans lequel
Z₂ est choisi dans le groupe constitué par
fluoro, chloro, bromo, iodo, hydroxyle, toluène-4-sulfonyloxy (-O-SO₂-C₆H₄-CH₃) et méthylsulfonyloxy (-O-SO₂-CH₃),
Z₃ est choisi dans le groupe constitué par
fluoro, chloro, bromo, iodo, hydroxyle, toluène-4-sulfonyloxy (-O-SO₂-C₆H₄-CH₃) et méthylsulfonyloxy (-O-SO₂-CH₃) ; et
R₁, R₂, R₃ et R₄ sont choisis, indépendamment les uns des autres, dans le groupe constitué par
un alkyle linéaire ou ramifié en C₁-C₃₀, un alcényle linéaire ou ramifié en C₂-C₃₀, un alcynyle linéaire ou ramifié en C₂-C₃₀, un sulfa (-SO₃H), un nitro, un amino, un hydroxy, un oligo(alkylène glycol en C₂-C₄), -NHCOR₅, -CONHR₆, -OCOR₇, -COOR₈ et -OR₉,
dans lequel R₅, R₆, R₇, R₈ et R₉ sont choisis dans le groupe constitué par un alkyle linéaire ou ramifié en C₁-C₃₀, un alcényle linéaire ou ramifié en C₂-C₃₀ et un alcynyle linéaire ou ramifié en C₂-C_{30.}

3. Copolymère selon la revendication 1 ou la revendication 2, dans lequel Z₂ et Z₃ sont identiques.

4. Copolymère selon l'une quelconque des revendications précédentes, dans lequel Z₁, Z₂ et Z₃ sont identiques, de préférence chloro.

5. Copolymère selon l'une quelconque des revendications précédentes, dans lequel R₁, R₂, R₃ et R₄ sont identiques, de préférence méthyle.

6. Copolymère selon l'une quelconque des revendications précédentes, dans lequel le copolymère comprend un ou plusieurs monomères supplémentaires de formule générale (III) 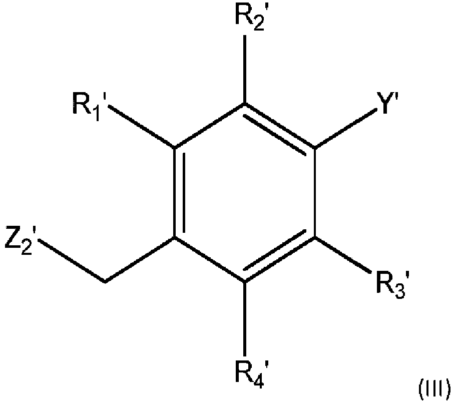 dans lequel
Z₂' est choisi dans le groupe constitué par
fluoro, chloro, bromo, iodo, hydroxyle, toluène-4-sulfonyloxy (-O-SO₂-C₆H₄-CH₃) et méthylsulfonyloxy (-O-SO₂-CH₃),
Y' est choisi dans le groupe constitué par
-CH₂Z₃',
dans lequel Z₃' est choisi dans le groupe constitué par fluoro, chloro, bromo, iodo, hydroxyle, toluène-4-sulfonyloxy (-O-SO₂-C₆H₄-CH₃) et méthylsulfonyloxy (-O-SO₂-CH₃) ;
un alkyle en C₁-C₃₀ linéaire ou ramifié, un alcényle en C₂-C₃₀ linéaire ou ramifié, un alcynyle en C₂-C₃₀ linéaire ou ramifié, un sulfa (-SO₃H), un nitro, un amino, un hydroxy,
-NHCOR₅', -CONHR₆', -OCOR₇', -COOR₈' et -OR₉',
dans lequel R₅', R₆', R₇', R₈' et R₉' sont choisis dans le groupe constitué par un alkyle linéaire ou ramifié en C₁-C₃₀, un alcényle linéaire ou ramifié en C₂-C₃₀ et un alcynyle linéaire ou ramifié en C₂-C_{30 ;} et
R₁', R₂', R₃' et R₄' sont choisis, indépendamment les uns des autres, dans le groupe constitué par
un alkyle linéaire ou ramifié en C₁-C₃₀, un alcényle linéaire ou ramifié en C₂-C₃₀, un alcynyle linéaire ou ramifié en C₂-C₃₀, un sulfa (-SO₃H), un nitro, un amino, un hydroxy, un oligo(alkylène glycol en C₂-C₄), -NHCOR₅', -CONHR₆', -OCOR₇', - COOR₈' et -OR₉',
dans lequel R₅', R₆', R₇', R₈' et R₉' sont choisis dans le groupe constitué par un alkyle linéaire ou ramifié en C₁-C₃₀, un alcényle linéaire ou ramifié en C₂-C₃₀ et un alcynyle linéaire ou ramifié en C₂-C₃₀, et
dans lequel
le monomère de formule générale (III) est différent du monomère de formule générale (II).

7. Copolymère selon l'une quelconque des revendications précédentes, dans lequel le composé de formule Il et IIa au moins un des R₁, R₂, R₃ et R₄ est choisi dans le groupe constitué par un alkyle linéaire ou ramifié en C₈-C₃₀, un alcényle linéaire ou ramifié en C₈-C₃₀, un alcynyle linéaire ou ramifié en C₈-C₃₀ et -OR₉, dans lequel Rg est choisi dans le groupe constitué un alkyle linéaire ou ramifié en C₈-C₃₀, un alcényle linéaire ou ramifié en C₈-C₃₀ et un alcynyle linéaire ou ramifié en C₈-C_{30.}

8. Copolymère selon l'une quelconque des revendications précédentes, dans lequel le copolymère comprend de 0,01 à 5 % (mol/mol), de préférence de 0,1 à 1 % (mol/mol) et de préférence encore 0,5 % (mol/mol) de monomère de formule générale (II).

9. Procédé de préparation d'un copolymère selon l'une quelconque des revendications précédentes, dans lequel le monomère de formule générale (I) et le monomère de formule générale (II) sont copolymérisés en présence d'un catalyseur acide de Lewis.

10. Procédé selon la revendication 9, dans lequel le catalyseur est choisi dans le groupe constitué par le catalyseur à base de bismuth(III), le catalyseur à base de molybdène et le catalyseur à base de tungstène, de préférence choisi dans le groupe constitué par WCl₄(MeCN)₂, WCl₄(THF)₂, WBr₂(CO)₃(dme) et Mol₂(CO)₃(MeCN)₂.

11. Procédé selon l'une quelconque des revendications 9 et 10, dans lequel la polymérisation du monomère de formule générale (I)
est effectuée en présence du catalyseur pendant toute la durée de la polymérisation, et
le monomère de formule générale (II) n'est pas ajouté avant qu'au moins 40 % en poids du monomère de formule générale (I) aient réagi.

12. Utilisation d'un copolymère selon l'une quelconque des revendications 1 à 8 comme revêtement.

13. Utilisation d'un copolymère selon l'une quelconque des revendications 1 à 8 comme protection contre la corrosion.

14. Poudre ou peinture comprenant le copolymère selon l'une quelconque des revendications 1 à 8.
